# EUROPEAN PATENT SPECIFICATION

(11) **EP 1 238 857 B1**
(45) Date of publication and mention of the grant of the patent: **29.10.2008**
(21) Application number: 02251277.6
(22) Date of filing: 25.02.2002
(51) Int. Cl.: B60R 1/06, B60R 1/074

(54) **External rearview mirror**
Aussenrückblickspiegel
Rétroviseur extérieur

(30) Priority: 28.02.2001 US 795734
(43) Date of publication of application: 11.09.2002
(73) Proprietor: METAGAL INDUSTRIA E COMERCIO LTDA., Estado de Sao Paulo, CEP 0990-090 (BR)
(72) Inventor: Miyabukuro, Pedro Takashi, Rua das Moncoes no.326, Estado de Sao Paulo, CEP 09090-520 (BR)
(74) Representative: Johnstone, Douglas Ian

(56) References cited:
- EP-A- 0 770 520
- US-A- 4 640 142
- US-A- 4 998 814
- US-A- 5 781 353
- US-A- 6 109 586

## Description

The present invention relates generally to external rearview mirror accessories of automotive vehicles.

Known external rearview mirrors usually include an assembly comprising a mirror plate, a mechanical or electrical device for regulating the position of the mirror plate which includes an actuator fixed to the mirror plate, transmission cables or an electrical cable extending from the actuator, and levers or an actuating button located in the interior of the vehicle and connected to the cable. The mirror assembly usually includes a support structure fixed to the actuator and a housing with an opening directed towards a region behind the vehicle and accommodating the mirror plate, the actuator and the support structure. The housing is fixed to the support structure. A vertical pivot point is partially accommodated in the housing. A stabilization device for stabilising the mirror position is incorporated in the support structure and arranged to permit articulation around the post. A base is fixed to the side of the vehicle and has a protuberance in which the inner or proximal end of the post is fixed. A reinforcement structure is provided in the base.

In conventional constructions of this type, a number of the components are formed from an appropriate plastic material. Some components are composed of metal alloys, e.g. the support structure for fixing the actuator, the housing, a part of the stabilisation device, the vertical post which forms a part of the stabilisation device, and the reinforcement structure of the base. This complicates the production process of the mirror assembly since it is necessary to handle two different materials on the production line, provide two types of equipment for the corresponding processes and/or have supplies of two types of material. This complicates the production process and makes it more difficult to manufacture. Another disadvantage is that the components of different materials must be assembled with one another, which also complicates the manufacturing process.

Also, when the mirror assembly includes parts of different materials fixed to one another generally by screws, more defects can occur due to: (i) the production process; (ii) vibration during use; (iii) differences in the fatigue points in the materials; (iv) different responses between the materials to use and environmental conditions; and (v) other factors.

US-A-6,109,586, on which the preamble of claim 1 is based, discloses an external rearview mirror assembly having a mirror plate with an electrical actuator. Fasteners fix the actuator to a support bracket composed of a polyolefin material and the support bracket has an opening through which an electrical cable assembly connected to the actuator passes. A housing accommodates the actuator and the support bracket. The support bracket has mounting holes to be mounted on studs extending from mounting bosses in the housing so as to fit the support bracket in the housing. A collar having an indented surface forms a single integral element with the support bracket. The collar is arranged for articulation around a pivot bush which extends into the housing from a projecting tongue of a mounting bracket. A partially compressed spring is mounted around the pivot bush between a stop at a distal end of the pivot bush and a shoulder in the collar. The mounting bracket has mounting bushes which receive fasteners of an adapter member and the adapter member is used to attach the mirror assembly to a side of a vehicle.

Accordingly, it an object of the present invention to provide an external rearview mirror which avoids at least one of the disadvantages of the prior art mirror assemblies.

According to the present invention there is provided an external rearview mirror assembly comprising:
a mirror plate;
a regulating device for regulating the position of said mirror plate and including an actuator;
a support structure for supporting said actuator;
a housing accommodating said actuator and said support structure;
a vertical post located inside said housing;
a device for stabilising the position of the mirror assembly, the device being incorporated in said support structure and arranged to permit articulation of said support structure around said post;
a base connectable to a side of a vehicle and including a protuberance which supports said post and a reinforcing structure located in said base, said support structure the structure of said actuator, said housing and said base being composed of a plastics material;
fitting means on a main part of said support structure and on said housing for fitting said support structure in said housing;
receptors on said main part of said support structure for receiving fixing elements for fixing said actuator of said regulating device to said support structure;
an aperture or window in said main part of said support structure through which control cables connected to said regulating device pass; and
a sleeve connected to said support structure having an indented or contoured surface and being arranged for articulation around said post, said sleeve constituting part of said stabilising device;
wherein said main part of said support structure, said fitting means on said support structure, said receptors of actuator fixing elements and said sleeve with its indented or contoured surface are all composed of a plastics material and together form a single integral element, characterized in that
said post, said reinforcing structure and said support structure are composed of a plastics material which is similar to plastics material of other components of said mirror assembly.

Thus, the rear view mirror assembly includes two unitary or one-piece plastics parts. The first part is for supporting the mirror plate and has the sleeve. The second part has the post around which the sleeve is rotatable, and the base configured for connection to a vehicle.

The main part of the support structure is preferably provided with towers and/or eyelets and/or similar receptors of screws for fixing the actuator of the regulating device to the support structure. The sleeve forms a lateral part of the support structure. A lower end of the sleeve has the indented or contoured surface.

When the external rearview mirror is designed in accordance with the present invention, it eliminates the disadvantages of the prior art and provides for the highly advantageous results.

The novel features which are considered as characteristic for the present invention are set forth in particular in the appended claims. The invention itself, however, both as to its construction and its method of operation, together with additional objects and advantages thereof, will be best understood from the following description of specific embodiments when read in connection with the accompanying drawings.

The invention will now be described by way of example only with reference to the accompanying drawings in which:
Figure 1 is an exploded view showing an external rear-view mirror assembly in accordance with the present invention; and

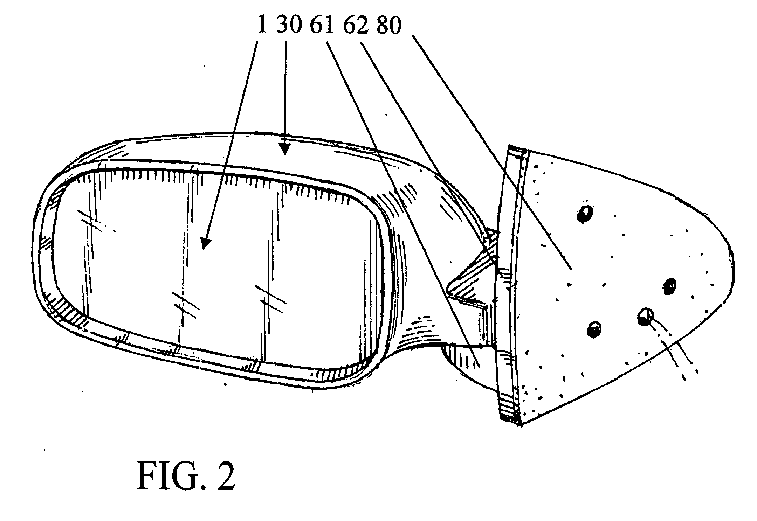

Figure 2 is a view showing the external rearview mirror assembly in accordance with the present invention in an assembled condition.

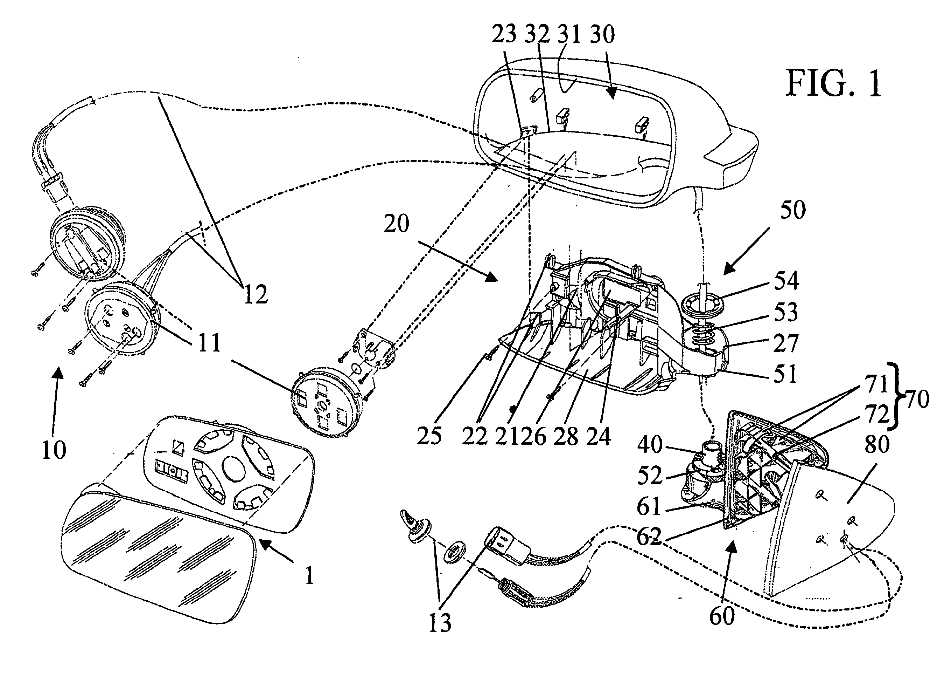

An external rearview mirror assembly in accordance with the present invention as shown in Figure 1 has a mirror plate set identified with reference numeral 1, a mechanical or electrical device 10, a regulating device including an actuator 11 to which a rear face of the mirror plate is fixed, transmission or electrical cables 12 extending from the actuator, and actuating levers or buttons 13 mounted in the interior of the vehicle and connected to the cables.

The mirror assembly also includes a support structure 20 to which the mirror plate actuator 11 is fixed, a housing 30 provided with an opening 31 directed towards a region behind the vehicle and supporting the mirror plate. The mirror plate actuator and the support structure 20 are fixed in the housing 30. The assembly also includes a vertical pivot post 40 partially located inside the housing 30, and a stabilisation device 50 incorporated in the support structure for stabilising the mirror position and for allowing articulation around the post 40. The assembly further includes a base 60 fixed on the side of the vehicle and having a protuberance 61 to which the post 40 is fixed, a reinforcement structure 70 provided in the base, and a cushioning layer 80 located between the base 60 and the vehicle body.

The inventive external rearview mirror assembly is designed so as to provide the smallest possible variation of the materials employed and the smallest possible need for parts to be assembled with one another by screw and the like. Therefore the support structure 20, the post 40 and the reinforcement structure 70, instead of being composed of metal alloy as in conventional rearview mirror assemblies, are composed of a plastic material similar to the plastic material used for other components of the mirror such as the structure of the actuator 11, the housing 30, the base 60 and others.

The support structure 20 has a main part 21 provided with a fitting part or part 22 to be connected with other fitting part or parts 23 provided in the housing 30. The fitting parts 22 and 23 fix the support structure and housing 30 to one another. The main part 21 also has towers and/or eyelets and/or similar receptors 24 for screws 25 which fix the actuator 11 of the mechanical or electrical regulating device 10 to the support 20. The main part 21 also has a window 26 through which the cables of the mechanical or electrical regulating device 10 pass. The support structure 20 also includes a lateral part formed as a sleeve 27 which constitutes part of the stabilisation device 50 which is articulated around the post 40. Its lower end has an indented or contoured surface 51. The main part 21, comprising: the fitting parts 22; the towers and/or eyelets and/or similar elements 24; and the lateral part formed as the sleeve 27 with its indented end 51, is composed of a plastic material and is formed as an integral one-piece part.

The base 60 includes a part formed as a plate 62, a protuberance 61 provided on an exterior side of the plate 62 and the post 40 which is incorporated in and/or projects from the protuberance 61 and has an indented surface 52 for co-operating with the indented surface 51 of the support structure 20. The base also includes a reinforcement structure 70 provided on an interior face of the plate 62 and including reinforcement ribs 71. The reinforcement structure 71 includes receptor towers 72 for fixing screws, for fixing the base 60 to the side of a vehicle. All these parts are composed of a plastic material and together form a single integral part.

Therefore the external rearview mirror which is designed as explained herein above, has all main components composed of a plastic or plastics material. This reduces the variation of the materials used for its manufacture and mounting and simplifies the production process.

The support structure 20 may incorporated in its under side a part in the form of a plate 28 which forms part of the bottom wall of the housing 30 which is provided with a corresponding opening 32 in its bottom wall. The support structure 20 can be introduced through the opening 32 which is then closed by the part which is formed as a plate 28.

The stabilisation device 50 may include: the sleeve 27 with an indented surface 51; the post 40 arranged around its lower end which surface 52 co-operates with the indented surface 51; a spring 53 which is axially compressible and acts to urge the surfaces 51, 52 against each other and a washer or retaining element 54 which may engage an upper end of the post 40 and restrains or supports one end of the spring 53 and also acts to hold the components of the stabilisation device so assembled.

The external rearview mirror assembly of the present invention can have other ornamental configurations and can be provided with alternatives to the mirror plate set 1, the actuator arrangement 10 and other components, which alternatives are not shown or described here.

It will be understood that each of the elements described above, or two or more together, may also find a useful application in other types of constructions differing from the types described above.

While the invention has been illustrated and described as embodied in an external rearview mirror assembly, it is not intended to be limited to the details shown, since various modifications and structural changes may be made without departing in any way from the scope of the present invention.

Without further analysis, the foregoing sufficiently reveals the nature of the present invention so that others can, by applying current knowledge, readily adapt it for various applications without omitting features that, from the standpoint of prior art, fairly constitute essential characteristics of generic or specific aspects of this invention.

## Claims

1. An external rearview mirror assembly comprising:
a mirror plate (1);
a regulating device for regulating the position of said mirror plate (1) and including an actuator (11);
a support structure (20) for supporting said actuator (11);
a housing (30) accommodating said actuator (11) and said support structure (20);
a vertical post (40) located inside said housing (30);
a device (50) for stabilising the position of the mirror assembly, the device (50) being incorporated in said support structure (20) and arranged to permit articulation of said support structure (20) around said post (40);
a base (60) connectable to a side of a vehicle and including a protuberance (61) which supports said post (40) and a reinforcing structure (70) located in said base (60), said support structure (20) the structure of said actuator (11), said housing (30) and said base (60) being composed of a plastics material;
fitting means (22, 23) on a main part (21) of said support structure (20) and on said housing (30) for fitting said support structure (20) in said housing (30);
receptors (24) on said main part (21) of said support structure (20) for receiving fixing elements (25) for fixing said actuator (11) of said regulating device to said support structure (20);
an aperture or window (26) in said main part (21) of said support structure (20) through which control cables (12) connected to said regulating device pass; and
a sleeve (27) connected to said support structure (20) having an indented or contoured surface and being arranged for articulation around said post (40), said sleeve (27) constituting part of said stabilising device (50);
wherein said main part (21) of said support structure (20), said fitting means (22) on said support structure (20), said receptors (24) of actuator fixing elements (25) and said sleeve (27) with its indented or contoured surface (51) are all composed of a plastics material and together form a single integral element, **characterized in that**
said post (40), said reinforcing structure (70) and said support structure (20) are composed of a plastics material which is similar to plastics material of other components (11, 30, 60) of said mirror assembly.

2. The external rearview mirror assembly according to claim 1, wherein said base (60) includes a plate (62) provided with said protuberance (61), and said post (40) which has an indented or contoured surface (52) cooperating with said indented or contoured surface (51) of said support structure (20), said base reinforcing structure (70) being provided on a rear face of said plate (62) and formed by reinforcement ribs (71) and receptor towers (72) for fixing means, said base (60) including said plate (62), said protuberance (61), said post (40), and said reinforcing structure (70) with said reinforcing ribs (71) and said receptor towers (72) being composed of a plastics material and forming a one-piece integral part.

3. The external rearview mirror assembly according to claim 1 or 2, wherein said support structure (20) includes a plastic plate (28), said housing (30) has an opening (32) in its lower wall through which opening (32) said support structure (20) is insertable, said plate (28) acting to close said opening (32) when said support structure (20) has been fully inserted into said housing (30).

## Patentansprüche

1. Außenrückspiegeleinheit, umfassend:
eine Siegelplatte (1);
eine Stellvorrichtung zum Einstellen der Position der Spiegelplatte (1) und ein Stellglied (11) umfassend;
eine Tragstruktur (20) zum Tragen des Stellglieds (11);
ein Gehäuse (30), das das Stellglied (11) und die Tragstruktur (20) beherbergt;
einen vertikalen Ständer (40), der innerhalb des Gehäuses (30) angeordnet ist;
eine Vorrichtung (50) zum Stabilisieren der Position der Spiegeleinheit, wobei die Vorrichtung (50) in der Tragstruktur (20) eingebaut und so angeordnet ist, dass sie eine gelenkige Verbindung der Tragstruktur (20) um den Ständer (40) herum ermöglicht;
eine Basis (60), die mit einer Seite eines Fahrzeugs verbunden werden kann und einen Vorsprung (61), der den Ständer (40) trägt, sowie eine Verstärkungsstruktur (70) umfasst, die in der Basis (60) angeordnet ist, wobei die Tragstruktur (20), die Struktur des Stellglieds (11),
das Gehäuse (30) und die Basis (60) aus einem Kunststoffmaterial bestehen;
Befestigungsmittel (22, 23) auf einem Hauptteil (21) der Tragstruktur (20) und auf dem Gehäuse (30) zum Befestigen der Tragstruktur (20) im Gehäuse (30);
Aufnahmevorrichtungen (24) auf dem Hauptteil (21) der Tragstruktur (20) zum Aufnehmen von Befestigungselementen (25) zur Befestigung des Stellglieds (11) der Stellvorrichtung an der Tragstruktur (20);
eine Öffnung oder ein Fenster (26) im Hauptteil (21) der Tragstruktur (20), durch welchen Steuerkabel (12) verlaufen, die mit der Stellvorrichtung verbunden sind; und
eine Muffe (27), die mit der Tragstruktur (20) verbunden ist, eine gezahnte oder profilierte Fläche aufweist und zur gelenkigen Verbindung um den Ständer (40) herum angeordnet ist, wobei die Muffe (27) einen Teil der Stabilisierungsvorrichtung (50) bildet;
wobei der Hauptteil (21) der Tragstruktur (20), die Befestigungsmittel (22) auf der Tragstruktur (20), die Aufnahmevorrichtungen (24) der Stellgliedbefestigungsmittel (25) und die Muffe (27) mit ihrer gezahnten oder profilierten Fläche (51) alle aus einem Kunststoffmaterial bestehen und zusammen ein einziges einteiliges Element bilden, **dadurch gekennzeichnet, dass**
der Ständer (40), die Verstärkungsstruktur (70) und die Tragstruktur (20) aus einem Kunststoffmaterial bestehen, das dem Kunststoffmaterial von anderen Bauteilen (11, 30, 60) der Spiegeleinheit ähnelt.

2. Außenrückspiegeleinheit nach Anspruch 1, wobei die Basis (60) eine Platte (62), die mit einem Vorsprung (61) versehen ist, den Ständer (40), der eine gezahnte oder profilierte Fläche (52) aufweist, die mit der gezahnten oder profilierten Fläche (51) der Tragstruktur (20) zusammenwirkt, und die Basisverstärkungsstruktur (70) umfasst, die auf einer Rückseite der Platte (62) vorgesehen und durch Verstärkungsrippen (71) und Aufnahmetürme (72) für Befestigungsmittel ausgebildet ist, wobei die Basis (60), die die Platte (62), den Vorsprung (61), den Ständer (40) und die Verstärkungsstruktur (70) mit den Verstärkungsrippen (71) und den Aufnahmetürmen (72) umfasst, aus einem Kunststoffmaterial besteht und ein einteiliges, einstückiges Teil bildet.

3. Außenrückspiegeleinheit nach Anspruch 1 oder 2, wobei die Tragstruktur (20) eine Kunststoffplatte (28) umfasst, das Gehäuse (30) eine Öffnung (32) in seiner unteren Wand aufweist, durch welche Öffnung (32) die Tragstruktur (20) eingeführt werden kann, wobei die Platte (28) dazu dient, die Öffnung (32) zu schließen, wenn die Tragstruktur (20) zur Gänze in das Gehäuse (30) eingeführt wurde.

## Revendications

1. Ensemble de rétroviseur extérieur, comprenant :
un miroir (1) ;
un dispositif de réglage conçu pour régler la position dudit miroir (1) et comprenant un actionneur (11) ;
une structure de support (20) conçue pour supporter ledit actionneur (11) ;
un boîtier (30) logeant ledit actionneur (11) et ladite structure de support (20) ;
un montant vertical (40) positionné à l'intérieur dudit boîtier (30) ;
un dispositif (50) de stabilisation de la position de l'ensemble de rétroviseur, le dispositif (50) étant intégré dans ladite structure de support (20) et agencé de manière à permettre l'articulation de ladite structure de support (20) sur ledit montant (40) ;
une base (60) apte à être reliée à un côté du véhicule et comprenant une saillie (61) qui supporte ledit montant (40), ainsi qu'une structure de renforcement (70) positionnée dans ladite base (60), ladite structure de support (20), la structure dudit actionneur (11), ledit boîtier (30) et ladite base (60) étant faits d'une matière plastique ;
des moyens d'adaptation (22, 23) sur une partie principale (21) de ladite structure de support (20) et sur ledit boîtier (30), conçus pour adapter ladite structure de support (20) dans ledit boîtier (30) ;
des récepteurs (24) sur ladite partie principale (21) de ladite structure de support (20), conçus pour recevoir des éléments de fixation (25) pour fixer ledit actionneur (11) dudit dispositif de réglage sur ladite structure de support (20) ;
une ouverture ou fenêtre (26) dans ladite partie principale (21) de ladite structure de support (20), à travers laquelle passent des câbles de commande (12) raccordés audit dispositif de réglage ; et
un manchon (27) relié à la dite structure de support (20), ayant une surface crantée ou profilée et étant agencé de sorte à s'articuler sur ledit montant (40), ledit manchon (27) faisant partie dudit dispositif de stabilisation (50) ;
dans lequel ladite partie principale (21) de ladite structure de support (20), lesdits moyens d'adaptation (22) sur ladite structure de support (20), lesdits récepteurs (24) d'éléments de fixation d'actionneur (25) et ledit manchon (27) avec sa surface crantée ou profilée (51) sont tous faits d'une matière plastique et forment ensemble un seul élément intégral, **caractérisé en ce que**
ledit montant (40), ladite structure de renforcement (70) et ladite structure de support (20) sont faits d'une matière plastique qui est similaire à la matière plastique d'autres composants (11, 30, 60) dudit ensemble de rétroviseur.

2. Ensemble de rétroviseur extérieur selon la revendication 1, dans lequel ladite base (60) comprend une plaque (62) munie de ladite saillie (61), et ledit montant (40) qui a une surface crantée ou profilée (52) coopérant avec ladite surface crantée ou profilée (51) de ladite structure de support (20), ladite structure de renforcement de base (70) étant positionnée sur une face arrière de ladite plaque (62) et formée de nervures de renforcement (71) et de tourelles de réception (72) pour des moyens de fixation, ladite base (60) comprenant ladite plaque (62), ladite saillie (61), ledit montant (40) et ladite structure de renforcement (70) avec lesdites nervures de renforcement (71) et lesdites tourelles de réception (72), étant faits d'une matière plastique et formant une seule pièce intégrale.

3. Ensemble de rétroviseur extérieur selon la revendication 1 ou 2, dans lequel ladite structure de support (20) comprend une plaque en plastique (28), ledit boîtier (30) présente une ouverture (32) dans sa paroi inférieure, ouverture (32) à travers laquelle ladite structure de support (20) peut être insérée, ladite plaque (28) agissant de sorte à fermer ladite ouverture (32) quand ladite structure de support (20) a été entièrement insérée dans ledit boîtier (30).
